# EUROPEAN PATENT SPECIFICATION

(11) **EP 2 401 600 B1**
(45) Date of publication and mention of the grant of the patent: **11.08.2021**
(21) Application number: 07796575.4
(22) Date of filing: 28.06.2007
(51) Int. Cl.: G01N 21/53, G01N 21/85, G01N 15/02, G01N 21/01, G01N 21/03, G01N 21/84, G01N 21/94, G01N 35/00, G01N 15/00, G01N 15/14

(54) **SYSTEMS AND METHODS FOR REMOTE MONITORING OF CONTAMINANTS IN FLUIDS**
SYSTEME UND VERFAHREN ZUR FERNÜBERWACHUNG VON VERUNREINIGUNGEN IN FLUIDEN
SYSTÈMES ET PROCÉDÉS PERMETTANT DE SURVEILLER À DISTANCE DES CONTAMINANTS DANS DES FLUIDES

(43) Date of publication of application: 04.01.2012
(73) Proprietor: Parker Hannifin Filtration (US), Inc., Mineral Well, TX 76067 (US)
(72) Inventor: BURNS, David, Mineral Wells, TX 76067 (US); ANHUA, Mei, Weatherford, TX 76086 (US); MARK, Scott, Weatherford, TX 76087 (US)
(74) Representative: HGF
(86) International application number: PCT/US2007/015138
(87) International publication number: WO 2009/002322

(56) References cited:
- WO-A1-2008/082377
- US-A- 5 040 890
- US-A- 5 781 284
- US-A1- 2005 151 968
- US-A1- 2005 151 968
- US-B1- 6 584 865
- US-B1- 6 710 878
- US-B2- 6 813 303

## Description

### FIELD OF THE INVENTION

The present invention relates to remote monitoring systems, and more particularly to a pipeline contaminant monitor designed to remotely monitor contaminant levels in process pipelines. The invention also relates to a method of monitoring contaminants in a pipeline using the pipeline contaminant monitor.

### BACKGROUND

Current commercially available gas turbines and other critical gas or fluid flow systems for use in connection with industrial processes can be extremely sensitive to contamination, such as, solid contaminants (i.e., particulates), liquid contaminants, and/or liquid aerosol, present within the process fluid flow. Solid contaminants, as an example, can act to wear rotating components, foul heat exchangers, contaminate cooling liquids, clog processing equipment, as well as affecting product quality and numerous other processing and equipment problems. Liquid contaminants, on the other hand, can accumulate or coalesce over time, and can, as the volume increases, travel along the sides and bottom of a pipeline and affect the efficiency of the fluid flow. Likewise, liquid aerosol or droplets, although small in mass, can similarly accumulate and build up over time, and have damaging effects on downstream equipment in the fluid flow system.

In order to minimize the occurrence of such contamination, filtration and separation equipment have been employed in connection with these fluid flow systems, so that contaminants present within the fluid flow can be removed therefrom. At present, most manufacturers have developed cleanliness requirement specifications for their process gas flow systems. To accommodate such requirements, modern filters and separators have been designed to remove particulate contaminants with high efficiency. However, the issue with liquid contaminants or liquid aerosols may remain. Moreover, the selection of filtration and separation equipment that can provide adequate removal of the right contaminants can be a difficult task.

In particular, there is available filtration and separation equipment adapted for handling different contaminants in connection with different applications. As a result, unless there is knowledge about the contaminants within the fluid flow, as well as their characteristics, inadequate filtration and separation equipment may be selected, purchased and subsequently installed. The failure to employ optimal or at least appropriate filtration and separation equipment, in many instances, can lead to inadequate removal of the contaminants resulting in damage to downstream equipment, or detrimental effects to product quality. In addition, operational costs of the system can be significantly higher as a result of poor performance caused by insufficient removal of the contaminants.

Even if the appropriate filters and separators may be used, an additional verification step may be needed in order to assure that contamination within the fluid system is being adequately controlled. Presently, most testing of fluid flow contaminants within an energy industry pipeline is accomplished by collecting samples of the fluid flow for subsequent offsite analysis. However, in many instances, a substantially accurate sample may not be available, especially when the sample cannot be isokinetically collected. In other words, if fluid entering the sampling system does not exhibit similar velocity and kinetic energy to the fluid flow in the pressurized process fluid flow, an accurate representation of contaminants within the fluid flow may not be collected. Additionally, at present, the collected sample must either be mailed or transported to a third party laboratory where the sample sits and waits to be measured and analyzed. During this period, the sample can change and the contaminants can often be lost to the sample container.

Moreover, contamination levels within a pipeline can oftentimes rise suddenly and very quickly. For example, aerosol particles can quickly accumulate and reach dangerous levels without being detected in time to avoid damage to expensive equipment. Current contaminant particle detectors typically lack the capability to remotely and continuously monitor the aerosol contaminants in a pipeline, and to provide an immediate notification and alarm upon the contaminant particles reaching a particular threshold level. It should be appreciated that reference to contaminant particles, or "particles" hereafter can include liquid, solid, and aerosol particles.

U.S. patent US 6,710,878 B1 describes an in-line particulate detector comprises a housing having an inner flow portion. The housing Is disposed between adjacent portions of pipeline to permit a fuel flow from a fuel source through the inner flow portion to a fuel consumer. A light source is positioned within the housing for emitting a light beam within the inner flow portion. A first photodetector is positioned within the housing to detect the full strength of the light beam. A second photodetector is positioned within the housing to detect low, baseline levels of the light beam. Circuitry is coupled to first and second photo detectors to monitor the ratio of light intensities. When a fuel containing particulates is introduced, the light beam is scattered and the intensity measured by the second photodetector will increase and the intensity measured by the first photodetector will decrease.

Accordingly, a need exists for a system that can remotely and continuously monitor contaminant particle levels in fluid flows, and which can generate an alarm upon a threshold level being reached.

### SUMMARY OF THE INVENTION

The present invention provides, in one aspect, a pipeline contaminant monitor as defined in appended independent claim 1.

In another aspect, the present invention provides a method of monitoring contaminants in a pipeline as defined in appended independent claim 12.

Particular preferred embodiments are defined in the appended dependent claims.

### BRIEF DESCRIPTION OF DRAWINGS

Figure 1 illustrates an overall system architecture in accordance with one embodiment of the present invention.
Figure 2 illustrates functional components of an assembly for monitoring contaminants in a fluid flow in accordance with an embodiment of the present invention.
Figure 3 illustrates a subassembly for use in connection with the system shown in Figure 2.
Figure 4 illustrates a subassembly for use in connection with the system shown in Figure 2.
Figure 5 illustrates a subassembly for use in connection with the system shown in Figure 2.
Figure 6 illustrates various options for disposing of a contaminant sample once it has been processed in the assembly shown in Figure 2.
Figure 7 illustrates an embodiment of the physical components, connections, and alignment of the assembly shown in Figure 2.
Figure 8 illustrates a probe for use in connection with an embodiment of the present invention.

### DESCRIPTION OF SPECIFIC EMBODIMENTS

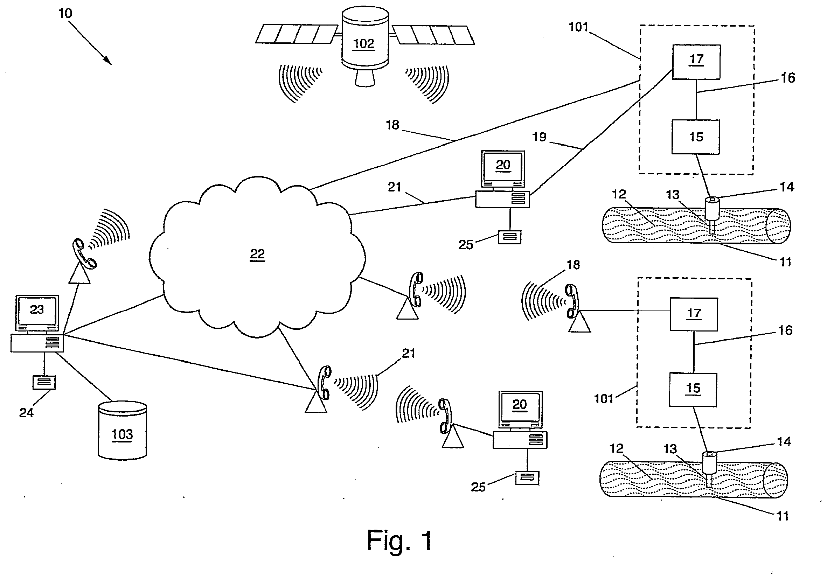

Generally, and with reference to Figure 1, the present invention, defined by the appended independent claims, provides, in one embodiment, a system 10 for use in remotely monitoring contaminants, such as, liquid aerosol particles within a fluid flow system, for instance, pipeline 11. The fluid flow within pipeline 11, in one embodiment may be a high pressure fluid flow. Alternatively, the fluid flow within pipeline 11 can be a low-pressure fluid flow. The overall architecture of system 10 can include a plurality of digital data processors that can be configured in a client-server architecture. For example, a digital data processor, such as central server 23, can be linked via a network 22, e.g., Internet, wireless network, landline, etc. to other digital data processors, such as client server 20 and contaminant monitor 101. Alternatively, central server 23 can be linked to client server 20 and contaminant monitor 101 via a satellite system 102. Of course, other designs and configurations may also be possible.

In an embodiment, the contaminant monitor 101 can be designed to continuously monitor contaminant levels within a fluid flow 12 in a pipeline 11. The contaminants in the fluid flow 12 can include liquid aerosols, liquid mist, solid particles, or hydrocarbon condensate aerosols, and can vary in size. For instance, liquid aerosol particles can range in size from approximately 0.1 microns to about 10 microns. Liquid mist particles can range in size from approximately 11 microns to about 100 microns. The fluid flow 12 in the pipeline 11 on the other hand, can be a liquid, a gas, or can have both liquid and gas components. For example, in an embodiment, the fluid flow 12 can be rich natural gas under high-pressure.

Typically, rich natural gas streams contain components that can condense into liquid form when exposed to pressure and temperature changes. Once in liquid flow, these condensate particles, which can include water and hydrocarbon components, can exist as aerosol particles ranging from about 0.1 to about 10 microns in size. As these aerosols can be volatile, they can vaporize and condense with slight changes in pressure and temperature. According to the present invention, the contaminant monitor 101 is configured to sample and measure the contaminant aerosols at pipeline pressure and temperature as they exist in the pipeline 11. High-pressure can be any pressure above atmospheric pressure. For example, in an embodiment, the fluid flow 12 in pipeline 11 can be pressurized at about 13789.51 kPa (2000 PSI, pounds per square inch).

The contaminant monitor 101 can also be designed to send data updates and alarm notifications via network 22 to central server 23 remotely located from pipeline 11. To that end, if the contaminant levels exceed a predetermined threshold, the contaminant monitor 101 can notify the client server 20, and the central server 23 simultaneously. In another embodiment, the contaminant monitor 101 can notify the central server 23 only, which may then notify the client server 20. In either embodiment, the central server 23 can have, for example, unlimited and continuous access to the contaminant monitor 101 and its data. The central server 23 can also store the data pertaining to the fluid flow contaminants in a data store 103, for reference and comparison purposes. For example, to troubleshoot or diagnose problems with pipeline 11.

In addition, the system 10 can provide for notification alerts to be generated when contaminant levels exceed a predetermined threshold. It should be noted that the predetermined threshold can be set to different levels depending on the application. The alerts can then be transmitted from the central server site to the client server site via wireless devices 24, 25. Examples of wireless devices include cell phones, hand-held PDA's, laptop computers, etc.

System 10, in an embodiment, can also include a probe 13 that can be inserted into a pipeline 11 having a fluid flow 12, through an access point, such as valve 14. The probe 13, in an embodiment, can be designed to isokinetically sample gaseous elements, e.g., aerosol particles, of the fluid flow 12. In other words, probe 13 collects the fluid sample at a substantially similar fluid velocity and pressure as that exhibited by the fluid flow in the pipeline 11. The isokinetic method of sampling ensures that the sample can be collected with a contaminant level that is representative of the contaminant level along the pipeline 11. Once collected, the fluid sample can be directed by the probe 13 into the contaminant monitor 101.

In another embodiment, the probe 13 can be designed to non-isokinetically sample the gaseous elements of the fluid flow 12 in the pipeline 11. For example, the probe 13 can collect the fluid sample at a different fluid velocity and pressure as that exhibited by the fluid flow in the pipeline 11. Constant non-isokinetic sampling of the fluid in the pipeline can be utilized when necessary to monitor various types of fluid streams, or for conducting relative data comparisons. Regardless of the sampling method utilized, the fluid sample can be directed by the probe 13 into the contaminant monitor 101.

The contaminant monitor 101, as shown in Figure 1, can include in one embodiment three subassemblies, an analyzer 15, a fiber optic cable 16, and a processor assembly 17. The pipeline contaminant monitor in accordance with the present invention comprises at least the features set out in the appended independent claims. The configuration shown in Figure 1 is simply one embodiment of the contaminant monitor 101. Those skilled in the art will appreciate that subassemblies 15, 16, and 17 can be combined into a single assembly unit, or fabricated into multiple assemblies. In an embodiment, the contaminant monitor 101 and/or its subassemblies 15, 16, and 17 can be encased in a housing. According to the present invention, the pipeline contaminant monitor 101 comprises a housing. A light source 31, an analyzer 15, at least one detector 34 and a processor 35 are situated within the housing.

Depending on the application, the housing (not shown) can, for instance, be a class 1, division 1 or 2, explosion proof housing.

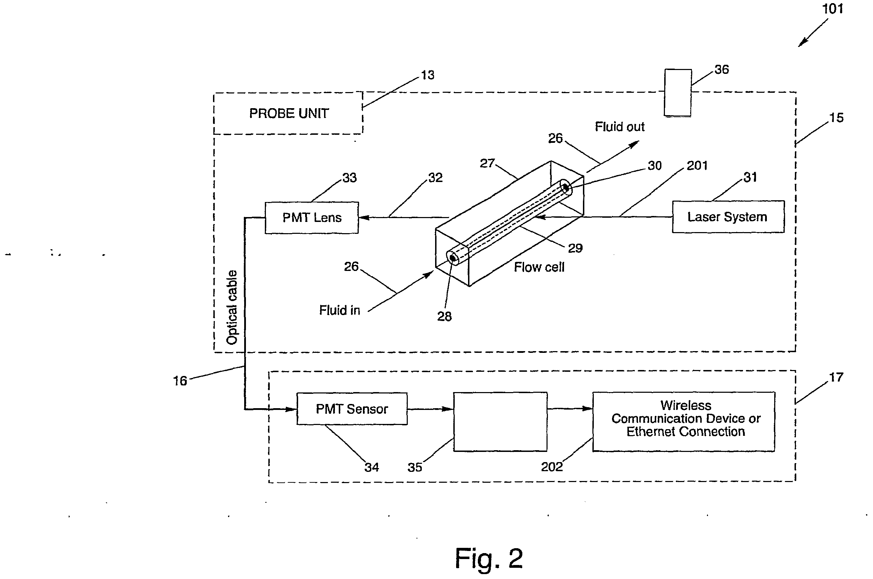

Referring now to Figure 2, in an embodiment, analyzer 15 of monitor 101
includes a flow cell 27. In an embodiment, the flow cell 27 can be transparent. The flow cell 27 includes an inlet 28, an outlet 30, and a passageway 29 disposed therebetween. The flow cell 27 may be designed to receive the sampled fluid 26 from the probe 13 at inlet 28, which fluid can be permitted to progress through passageway 29, and exit at outlet 30. The passageway 29, in an embodiment, can serve as sampling space in which the sample fluid 26 can be illuminated by the light source 31 to identify contaminant particles.

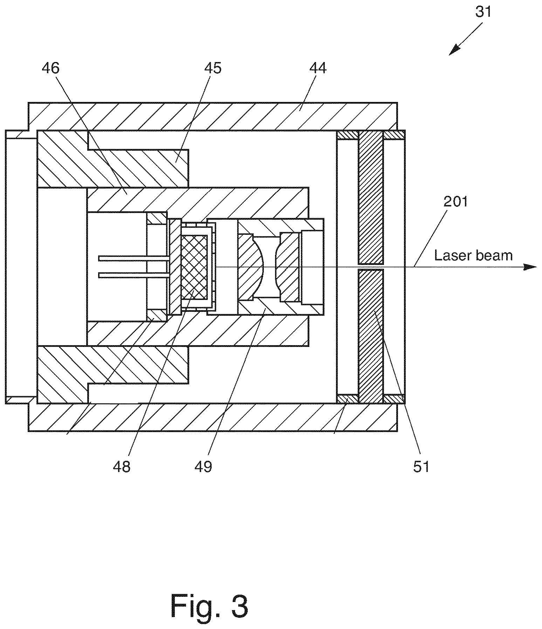

Light source 31, in one embodiment, can be a laser system or other light source capable of generating a focused beam of light 201. The light source 31 can be designed to propagate a focused beam of light 201 towards a portion of the passageway 29 within the flow cell 27 containing the sampled fluid 26, such that scattered light can be generated when a contaminant particle in the sampled fluid 26 contacts the focused beam of light 201. In an embodiment shown in Figure 3, light source 31 can include an infrared laser diode 48 that can emit laser radiation, for instance, at a wavelength of about 658 nanometers and about 50 mW of power. It should be appreciated that the wavelength and output power of the laser radiation can be designed to permit tuning or adjustment, for different applications. Light source 31 can further include a focus lens 49, which focuses the beam 201 emanating from the laser diode 48, and directs the beam 201 onto substantially the center of the flow cell 27. A spatial filter 51 can be included to reduce noise on the focused laser beam 201. Light source 31, in an embodiment, can also include 1) a lens tube 44 to hold the light source assembly together, 2) an adapter 45 for connecting the focus lens 49 to the lens tube 44, and 3) a focus lens tube 46 for holding the focus lens 49.

To accommodate light source 31, the flow cell 27, in an embodiment, can be tubular or rectangular in shape or any other geometric shape, and can be relatively transparent to light so that light from light source 31 can travel there through for subsequent analysis. To that end, the flow cell 27 can be made from a quartz material. Of course, other suitable materials can be used, for instance, glass, plastic, or sapphire, etc.

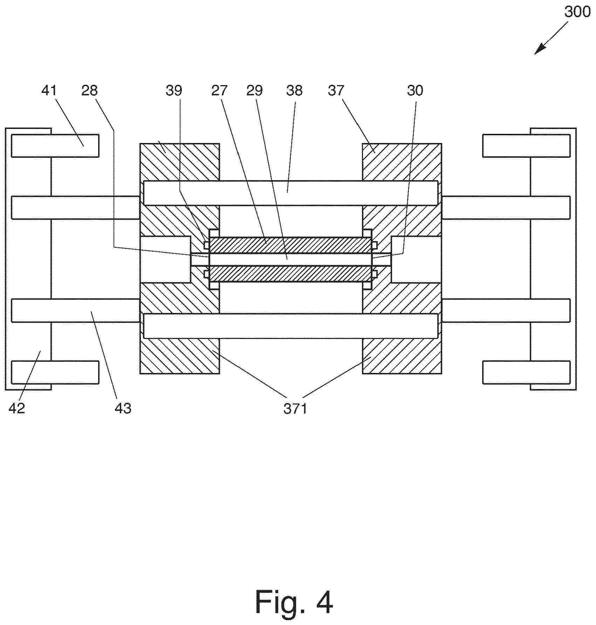

To secure flow cell 27 in position, referring now to Figure 4, a flow cell assembly 300 may be provided for high-pressure gas flow to be utilized. The assembly 300, in one embodiment, can include a base 37 upon which the flow cell 27 may be secured. In an embodiment, the base 37 may include two base ends 371 between which the flow cell 27 may be secured. Assembly 300 may also include connecting rods 38 for connecting the two base ends 371, and for pulling the base ends 371 toward one another to secure the flow cell 27 therebetween. In an embodiment, sealing gasket rings 39 can be utilized to prevent leakage of the sample fluid 26 from the flow cell 27. In addition, adapter plate 42 may be provided to hold the ends of base 37 in place, while connection rods 41, 43 can be utilized to secure the ends of base 37 to the adapter plate 42. It should be noted that assembly 300 and its component parts is simply one embodiment of an assembly mechanism for fastening and securing the flow cell 27 in proper position. Those skilled in the art will appreciate that various assembly mechanisms can be utilized to secure flow cell 27.

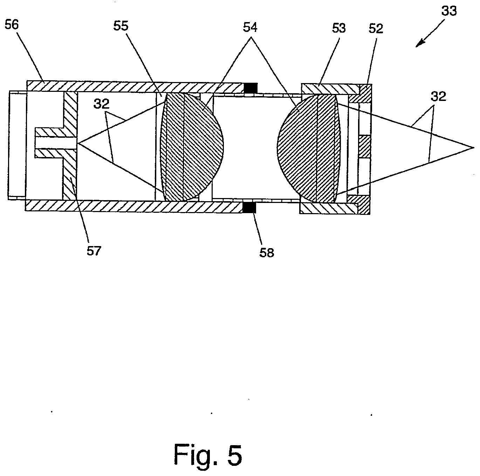

Still referring to Figure 2, the analyzer 15 can also include collecting lens assembly 33. Collecting lens assembly 33 may be designed to collect scattered light 32 emanating from the flow cell 27, and can direct the collected scattered light to a detector 34. In one embodiment, scattered light can be directed to detector 34 via fiber optic cable 16. Of course, the direction of scattered light to the detector 34 can be accomplished using other known mechanisms, which may not include the use of a fiber optic cable. Detector 34, in one embodiment, can be located in the processor assembly 17. As illustrated in Figure 5, the collecting lens assembly 33 can include a light filter 52, lens system 54, and an optical cable adapter 57. The light filter 52, as shown, may be designed to block direct light, such as, incoming laser beam from the light source 31, but may be designed to allow scattered light 32 from the particles to pass through the filter 52. Scattered light passing through the filter 52, in an embodiment, can be collected by the lens system 54. Lens system 54, in one embodiment, can include opposing convex lenses designed to collect forward scattered light 32 from the particles. It should be noted that lens system 54 can have other configurations, for instance, one lens so long as that one lens has the properties of the two lens system. The collected scattered light can then be directed by lens system 54 to an optical sensor, such as detector 34, in processor assembly 17 via the fiber optic cable 16. In an embodiment, the fiber optic cable can act to reduce the scattered light to a optimum level of sensitivity for detector operation. In an embodiment, the fiber optic cable 16 can be connected to the collecting lens assembly 33 by the optical cable adapter 57. The collecting lens assembly 33 can also include a lens tube 56, which can have an adjustable tube portion 53 that houses the lens system 54. To secure the lens system 54 in place, retaining ring 55 may be provided to maintain the lens system 54 in the adjustable tube portion 53 of assembly 33. The adjustable tube 53 can be locked in place by a locking mechanism 58. Of course, other assemblies and mechanisms can be utilized to secure the lens system 54 in the proper position.

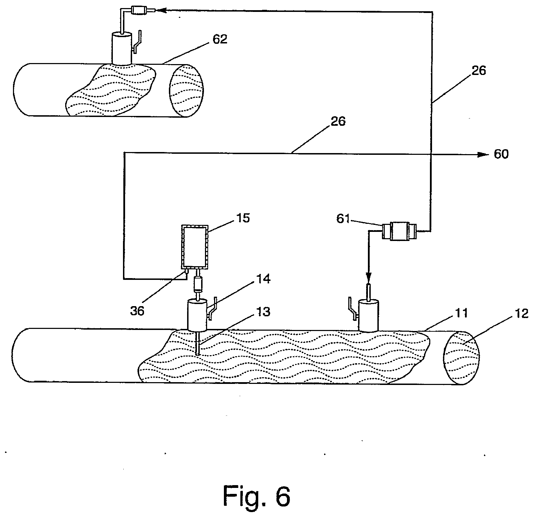

With reference now to Figure 6, in an embodiment, analyzer 15 of monitor 101 can also include a release valve 36, which can be utilized to control the flow rate, and to remove the analyzed sampled fluid 26 from the analyzer 15 when the sampled fluid 26 is no longer needed. After exiting the analyzer 15, there may be several options for disposal of the sampled fluid 26. In one option, the sampled fluid 26 may be reinjected back into pipeline 11 at high pressure, utilizing a high pressure gas pump 61 or compressor. In another option the sampled fluid 26 may be vented into the atmosphere 60. This option may be cost effective, but the sample amount vented may need to comply with greenhouse gas emissions requirements. A further option may be to direct the analyzed sampled fluid 26 into a low-pressure pipeline 62 or flare system.

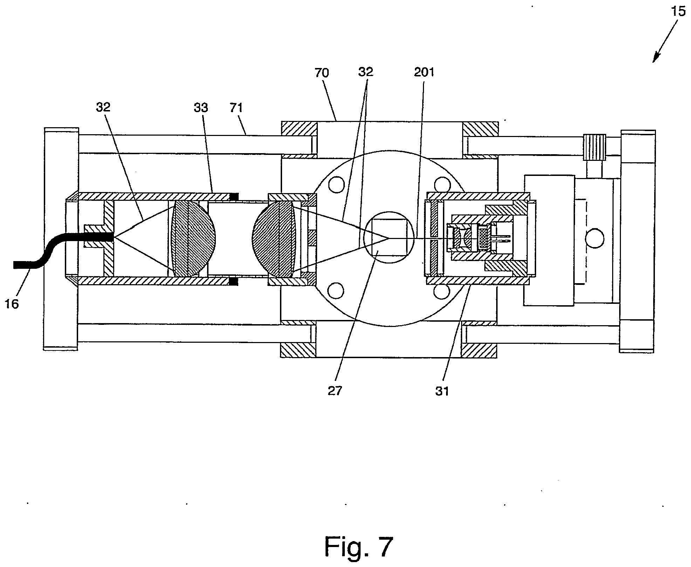

Figure 7 depicts an embodiment of an assembled analyzer 15 of monitor 101, and its components. As shown, the light source 31, flow cell 27, collecting lens assembly 33, and fiber optic cable 16, can be arranged in series within the analyzer 15. Of course, other designs may be used. To provide support and protection to the sub-assemblies and component parts, exterior case 70 and connection rods 71 may be provided.

Referring again to Figure 2, as noted, monitor 101 can also include the processor assembly 17. In an embodiment, processor assembly 17, can be made to receive the scattered light from the collection lens assembly 33 in analyzer 15, convert the scattered light into data, and distribute the data over a communication network 22 to the central server 23. In one embodiment, the processor assembly 17 can include the detector 34 of the pipeline contaminant monitor 101 in accordance with the present invention. The detector 34 can be an optical sensor, such as a photomultiplier tube, photodiode, or charge-coupled device. The detector 34 can also receive scattered light from the collection lens assembly 33, and convert the scattered light into electrical signals that, in one embodiment, can be proportional to the size of contaminant particles in the sampled fluid 26. Various algorithms and commercially available technology can be used to accomplish this. As such, the intensity of the scattered light can be determined by the particle dimension and its refracting index. With such information, the particle size can be determined from the intensity of the scattered light.

The processor assembly 17 can also include the processor 35 of the pipeline contaminant monitor 101 in accordance with the present invention, designed to receive the electrical signals from the detector 34. These signals can thereafter be quantified and converted into digital data pertaining to the contaminant particles. The digital data can include information such as particle size, contaminant concentration, and particle distribution. The processor 35, in accordance with the present invention, is also configured to transmit the digital data over the communication network 22, which can include the Internet, to the central server 23 for display and evaluation.

In an embodiment, the processor 35 can transfer the digital data to the central server 23, and/or communication network 22 via a wireless communication device 202, such as, a cell phone, satellite communication device, radio broadcast signal, or Ethernet connection. In one embodiment, the communication device 202 can be part of the processor assembly 17. Alternatively, the communication device 202 can be an external connection to the processor assembly 17.

In another embodiment, the processor 35 can transfer the digital data over a landline or network connection 18, 19 of system 10, to a LAN, such as an Ethernet hub, from which the data can then be accessed, by the central server 23 and/or client server 20 via the Internet or other communication network 22.

In addition, system 10 can include communication devices 24, 25, for example, cell phones, PDAs, etc. In an emergency situation, such as when contaminant levels are too high, cell phone 24 at the central server site can be utilized to call cell phone 25 to alert personnel at the client server site of the emergency.

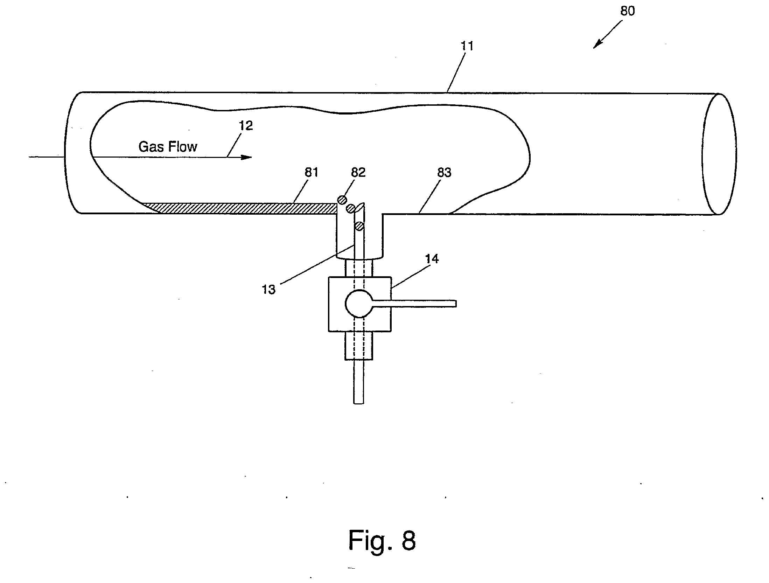

In another embodiment 80 illustrated in Figure 8, the fluid flow 12 can be a low-pressure or high-pressure gas flow. Oftentimes, in gas flows, a liquid film 81 can form and travel along the inner surface 83 of the pipeline 11. Extending the probe 13 too far towards the middle of the pipeline 11, can result in proper sampling of the gaseous fluid flow 12, but can leave the liquid film 81 undetected. Proper positioning of the probe 13 within pipeline 11 can allow the probe 13 to sample aerosols, mist particles, and solid particles sufficiently small enough to be moved by or entrained in the gaseous fluid flow 12. For many types of fluid flows, the probe 13 can be positioned virtually anywhere in the pipeline 11, to acquire an accurate representative sample of the fluid flow 12. However, to sample the gaseous fluid flow 12 as well as the liquid film 81 traveling along the inner surface of the pipeline 11, the probe 13 can be minimally extended into the pipeline 11. For example, the probe 13 can be extended into the pipeline 11, and positioned so that the probe 13 does not extend beyond (or far beyond) inner surface 83 of the pipeline 11. The liquid film 81 can wick off the inner surface 83 of the pipeline 11, as mist and aerosol particles 82 that can be small enough to move with the gaseous fluid flow 12 into the probe 13 for subsequent detection and measurement.

In operation, with reference again to Figures 1 and 2, fluid flow 12 in pipeline 11 can be isokinetically sampled continuously or periodically by probe 13. The probe 13 can then direct the sampled fluid 26 to the analyzer 15 in the contaminant monitor 101. Upon entry into the analyzer 15, the sampled fluid 26 is directed through the flow cell 27. The sample fluid 26 can enter the flow cell 27 at the inlet 28. As the sampled fluid 26 progresses through the passageway 29 in flow cell 27, it intersects and is illuminated by laser beam 201, which is generated by light source 31. The laser beam 201 can be aimed, in an embodiment, at approximately the center of flow cell 27.

In response to the illumination, illuminated contaminant particles in the sampled fluid 26 cause light 32 to scatter and emanate in various directions from flow cell 27. In one embodiment, the intensity of the scattered light can be determined by the particle dimension and its refracting index. Therefore, the particle size can be calculated from the intensity of the scattered light. The collection lens assembly 33 can then collect the forward scattered light 32, and direct it through the fiber optic cable 16, out of analyzer 15, and to detector 34 located in the processor assembly 17 for further processing. Also, once the sampled fluid 26 exits the flow cell 27 at outlet 30, it may no longer be needed, and can be released from the analyzer 15 through release valve 36.

The detector 34, in an embodiment, can include a photomultiplier tube, photodiode, or both, can be located in the processing assembly 17, and can receive the scattered light from the fiber optic cable 16. The detector 34 acts to convert the scattered light, in one embodiment, into modular electrical signals that can be proportional to the size of the contaminant particles. The detector 34 can then transfer the electrical signal to the processor 35, which can quantify and convert the electrical signals into digital data pertaining to the contaminant particles. The digital data can include particle size, contaminant concentration, and particle distribution data. The digital data can subsequently be utilized to determine if the level of contaminants is above an acceptable threshold level. In an embodiment, particle sizes ranging from 0.1 microns to 100 microns can be identified.

Thereafter, the processor 35 can utilize an Ethernet connection or wireless communication device to form a connection link 19, to the client server 20, in order to transmit digital data directly to the client server 20 for display and evaluation. In one embodiment of the present invention, the digital data can be transmitted simultaneously to the remotely located central server 23 via link 18 and network 22. In addition to transmitting digital data to the client server 20 and the central server 23, notification of alerts and emergency conditions can also be sent.

In another embodiment, there may be no direct communication link 19 between the contaminant monitor 101 and the client server 20. In such a configuration, the digital data can be transmitted over communication link 18, across network 22, and on to central server 23. The central server 23 can then evaluate the digital data to determine the contaminant levels in pipelines 11, and if necessary, update the various client servers 20 with reports that may be transmitted over the Internet 22 and communication link 21. Similarly, the central server 23 can notify and alert the client servers 20 of emergency conditions, for instance, if contaminant threshold levels have increased to unsafe levels.

The present invention can be utilized in critical containment-sensitive applications, such as, power generation and ultrasonic gas metering, etc. The present invention can be utilized to provide a customer/client with an indication as to when downstream equipment may be in danger of being harmed by high contaminant levels in pipelines. The present invention can also be implemented as a service that provides customers with contaminant level updates, as well as immediate alerts in the event of a drastic increase in contaminant levels.

Advantages of the present invention include the ability to remotely and continuously monitor contaminant levels in multiple pipelines, and at multiple sites from a single central server. Another advantage of the present invention is the ability to quickly respond, and provide notification of sudden increased contamination levels at client sites, in order to prevent equipment damage at the client site.

While the invention has been described in connection with the specific embodiments thereof, it will be understood that it is capable of further modification within the scope defined by the appended claims.

Furthermore, this application is intended to cover, within the scope defined by the appended claims, any variations, uses, or adaptations of the invention, including such departures from the present disclosure as come within known or customary practice in the art to which the invention pertains.

## Claims

1. A pipeline contaminant monitor (101) comprising:
a housing;
a light source (31) situated within the housing;
an analyzer (15), situated within the housing, for a) illuminating, with the light source (31), sampled fluid (26) removed from a pipeline having contaminant particles, and b) collecting scattered light from contaminant particles in the illuminated sampled fluid (26), the analyzer (15) having a flow cell (27) configured to receive sampled fluid (26) flow at a pressure and temperature exhibited by the fluid flow (12) within the pipeline (11) and to preserve the sampled fluid (26) flow at the pressure and temperature within the pipeline;
at least one detector (34), situated within the housing, for generating electrical signals from scattered light (32) from the analyzer (15); and
a processor (35), situated within the housing, a) for converting the electrical signals from the at least one detector (34) into digital data pertaining to the contaminant particles for evaluation, and b) for transmitting the digital data to a communication network (22) to distribute the digital data to at least one digital data processor (20, 23) for further processing.

2. A pipeline contaminant monitor (101) according to claim 1, further comprising a probe (13) for extending from the housing into the pipeline, the probe (13) being configured to direct the sampled fluid (26) into the analyzer (15) of the pipeline contaminant monitor (101) for isokinetically sampling the sampled fluid (26) removed from the pipeline to ensure that a representative amount of contaminants within the pipeline can subsequently be measured, the contaminant monitor (101) optionally further comprising a pump (61) for re-injecting the sampled fluid (26) into the pipeline, and preferably wherein the fluid in the pipeline is a high-pressure gas flow.

3. A pipeline contaminant monitor (101) according to claim 1, further comprising a probe (13) for extending from the housing into the pipeline, the probe (13) being configured to direct the sampled fluid (26) into the analyzer (15) of the pipeline contaminant monitor (101) for non-isokinetically sampling the sampled fluid (26) removed from the pipeline, or further comprising a probe (13) for extending from the housing into the pipeline for sampling fluid located along an inner surface (83) of the pipeline.

4. A pipeline contaminant monitor (101) according to claim 1, wherein the flow cell (27) comprises an inlet (28), an outlet (30), and a passageway (29) there between, the flow cell (27) being designed to receive the sampled fluid (26) at the inlet (28), and to direct the sampled fluid (26) through the passageway (29) so as to permit the fluid to be illuminated by the light source (31), and to further direct the sampled fluid (26) to the outlet (30), or wherein the analyzer (15) further includes a collection lens (33) for collecting the scattered light (32) and transferring the scattered light (32) to the at least one detector (34) for further processing.

5. A pipeline contaminant monitor (101) according to claim 1, wherein the fluid in the pipeline is a high-pressure fluid flow (12), or wherein the fluid in the pipeline is a low-pressure fluid flow (12).

6. A pipeline contaminant monitor (101) according to claim 1, wherein the light source (31) is a laser diode.

7. A pipeline contaminant monitor (101) according to claim 1, wherein the at least one detector (34) is a photomultiplier tube, photodiode, or charge-coupled device.

8. A pipeline contaminant monitor (101) according to claim 1, wherein the digital data includes particle distribution, particle size data, and contaminant concentration.

9. A pipeline contaminant monitor (101) according to claim 1, wherein the analyzer (15) is designed to collect scattered light (32) from liquid aerosol contaminant particles having a size of from 0.1 microns to 10 microns, or wherein the analyzer (15) is designed to collect scattered light (32) from liquid mist contaminant particles having a size of from 11 microns to 100 microns.

10. A pipeline contaminant monitor (101) according to claim 1, wherein the processor (35) is designed to transmit digital data to the communication network (22) on an Ethernet connection, or wherein the processor (35) is designed to transmit digital data over a wireless communication network (22), or wherein the processor (35) is designed to transmit the digital data on a radio broadcast signal.

11. A pipeline contaminant monitor (101) according to claim 1, further comprising a fiber optic cable (16) for directing the scattered light (32) to the at least one detector (34), preferably wherein the fiber optic cable (16) is configured to act to reduce the scattered light (32) to a level for optimum sensitivity and the at least one detector (34) operation.

12. A method of monitoring contaminants in a pipeline (11), the method comprising:
directing a sampled fluid (26) of a fluid flow (12) removed from the pipeline into a pipeline contaminant monitor (101) according to claim 1, such that the sampled fluid (26) along with contaminant particles therewithin are preserved at a pressure and a temperature exhibited by the fluid flow (12) within the pipeline for subsequent measurement;
illuminating, within the pipeline contaminant monitor (101), the sampled fluid (26) removed from the fluid flow (12) within the pipeline with the light source (31), so as to generate scattered light (32) from contaminant particles within the sampled fluid (26);
converting, using the at least one detector (34), the scattered light (32) into an electrical signal that is representative of the contaminant particle size; processing, using the processor (35), the electrical signal into digital data pertaining to the contaminant particles; and
transmitting, using the processor (35), the digital data via a communication network (22) to a remotely situated digital data processor (20, 23) for evaluation.

13. A method as set forth in claim 12, further comprising the step of non-isokinetically sampling the fluid flow (12) in the pipeline; or further comprising the step of isokinetically sampling the fluid flow (12) in the pipeline, and optionally further comprising either the step of re-injecting the sampled fluid (26) into the pipeline or the step of venting the sampled fluid (26) into the atmosphere.

14. A method as set forth in claim 12, further comprising the step of storing the digital data pertaining to the contaminant particles for reference and comparison.

15. A method as set forth in claim 12, wherein the step of illuminating includes directing the sampled fluid (26) through the flow cell (27) so as to permit at least one contaminant particle in the sampled fluid (26) to contact with light from the light source (31) to generate scattered light (32).

16. A method as set forth in claim 12, wherein the step of distributing includes transmitting the digital data to the communication network (22) on an Ethernet connection, or wherein the step of distributing includes transmitting the digital data over a wireless communication network (22) or broadcast signal.

17. A pipeline contaminant monitor (101) according to claim 4,
wherein the light source (31) is positioned within the housing for propagating a focused beam (201) of light across the passageway (29) containing the sampled fluid (26), so that scattered light (32) is generated when the contaminant particles contact the focused beam (201).

18. A pipeline contaminant monitor (101) according to claim 17, wherein the at least one detector (34) is configured to convert the scattered light (32) received from the collection lens (33) into an electrical signal that is proportional to the size of the contaminant particles.

## Patentansprüche

1. Pipelineverunreinigungs-Überwachungsgerät (101), umfassend:
ein Gehäuse;
eine Lichtquelle (31), die sich innerhalb des Gehäuses befindet;
einen Analysator (15), der sich innerhalb des Gehäuses befindet, zum a) Beleuchten, mit der Lichtquelle (31), von entnommenem Fluid (26), das aus einer Pipeline mit Verunreinigungspartikeln entfernt wurde, und b) Sammeln von Streulicht aus Verunreinigungspartikeln im beleuchteten entnommenen Fluid (26), wobei der Analysator (15) eine Durchflusszelle (27) aufweist, die konfiguriert ist, um entnommenes Fluid (26) mit einem Druck und einer Temperatur aufzunehmen, die der Fluidstrom (12) innerhalb der Pipeline (11) aufweist, und den Strom von entnommenem Fluid (26) mit dem Druck und der Temperatur innerhalb der Pipeline aufrechtzuerhalten;
mindestens einen Detektor (34), der sich innerhalb des Gehäuses befindet, zum Erzeugen elektrischer Signale aus Streulicht (32) aus dem Analysator (15); und
einen Prozessor (35), der sich innerhalb des Gehäuses befindet, a) zum Umwandeln der elektrischen Signale aus dem mindestens einen Detektor (34) in digitale Daten, die sich auf die Verunreinigungspartikel beziehen, zur Auswertung, und b) zum Übertragen der digitalen Daten an ein Kommunikationsnetz (22), um die digitalen Daten an mindestens einen digitalen Datenprozessor (20, 23) zur weiteren Verarbeitung zu verteilen.

2. Pipelineverunreinigungs-Überwachungsgerät (101) nach Anspruch 1, ferner umfassend eine Sonde (13) zum Erstrecken von dem Gehäuse in die Pipeline, wobei die Sonde (13) konfiguriert ist, um das entnommene Fluid (26) in den Analysator (15) des Pipelineverunreinigungs-Überwachungsgeräts (101) zur isokinetischen Probenahme des entnommenen Fluids (26) zu leiten, das aus der Pipeline entfernt wurde, um sicherzustellen, dass anschließend eine repräsentative Menge von Verunreinigungen innerhalb der Pipeline gemessen werden kann, wobei das Verunreinigungsüberwachungsgerät (101) optional ferner eine Pumpe (61) für Wiedereinspritzen des entnommenen Fluids (26) in die Pipeline umfasst, und vorzugsweise wobei das Fluid in der Pipeline ein Hochdruckgasstrom ist.

3. Pipelineverunreinigungs-Überwachungsgerät (101) nach Anspruch 1, ferner umfassend eine Sonde (13) zum Erstrecken von dem Gehäuse in die Pipeline, wobei die Sonde (13) konfiguriert ist, um das entnommene Fluid (26) in den Analysator (15) des Pipelineverunreinigungs-Überwachungsgeräts (101) zur nicht isokinetischen Probenahme des aus der Pipeline entfernten entnommenen Fluids (26) zu leiten, oder ferner umfassend eine Sonde (13) zum Erstrecken von dem Gehäuse in die Pipeline zur Probenahme von Fluid, das sich entlang einer Innenfläche (83) der Pipeline befindet.

4. Pipelineverunreinigungs-Überwachungsgerät (101) nach Anspruch 1, wobei die Durchflusszelle (27) einen Einlass (28), einen Auslass (30) und einen Durchgang (29) dazwischen umfasst, wobei die Durchflusszelle (27) ausgelegt ist, um das entnommene Fluid (26) am Einlass (28) aufzunehmen und das entnommene Fluid (26) durch den Durchgang (29) zu leiten, um zu ermöglichen, dass das Fluid durch die Lichtquelle (31) beleuchtet wird, und das entnommene Fluid (26) zum Auslass (30) weiterzuleiten, oder wobei der Analysator (15) ferner eine Sammellinse (33) zum Sammeln des Streulichts (32) und zum Übertragen des Streulichts (32) an den mindestens einen Detektor (34) zur Weiterverarbeitung umfasst.

5. Pipelineverunreinigungs-Überwachungsgerät (101) nach Anspruch 1, wobei das Fluid in der Pipeline ein Hochdruck-Fluidstrom (12) ist oder wobei das Fluid in der Pipeline ein Niederdruck-Fluidstrom (12) ist.

6. Pipelineverunreinigungs-Überwachungsgerät (101) nach Anspruch 1, wobei die Lichtquelle (31) eine Laserdiode ist.

7. Pipelineverunreinigungs-Überwachungsgerät (101) nach Anspruch 1, wobei der mindestens eine Detektor (34) eine Photovervielfacherröhre, eine Photodiode oder eine ladungsgekoppelte Vorrichtung ist.

8. Pipelineverunreinigungs-Überwachungsgerät (101) nach Anspruch 1, wobei die digitalen Daten Partikelverteilung, Partikelgrößendaten und Verunreinigungskonzentration umfassen.

9. Pipelineverunreinigungs-Überwachungsgerät (101) nach Anspruch 1, wobei der Analysator (15) ausgelegt ist, um Streulicht (32) aus flüssigen Aerosol-Verunreinigungspartikeln mit einer Größe von 0,1 Mikrometer bis 10 Mikrometer zu sammeln, oder wobei der Analysator (15) ausgelegt ist, um Streulicht (32) aus Flüssignebel-Verunreinigungspartikeln mit einer Größe von 11 Mikrometer bis 100 Mikrometer zu sammeln.

10. Pipelineverunreinigungs-Überwachungsgerät (101) nach Anspruch 1, wobei der Prozessor (35) ausgelegt ist, um digitale Daten über eine Ethernet-Verbindung an das Kommunikationsnetz (22) zu übertragen, oder wobei der Prozessor (35) ausgelegt ist, um digitale Daten über ein drahtloses Kommunikationsnetz (22) zu übertragen, oder wobei der Prozessor (35) ausgelegt ist, um die digitalen Daten über ein Rundfunksignal zu übertragen.

11. Pipelineverunreinigungs-Überwachungsgerät (101) nach Anspruch 1, ferner umfassend ein Glasfaserkabel (16) zum Leiten des Streulichts (32) zu dem mindestens einen Detektor (34), vorzugsweise wobei das Glasfaserkabel (16) konfiguriert ist, um zum Reduzieren des Streulichts (32) auf ein Niveau für optimale Empfindlichkeit und den Betrieb des mindestens einen Detektors (34) zu wirken.

12. Verfahren zum Überwachen von Verunreinigungen in einer Pipeline (11), wobei das Verfahren umfasst:
Leiten eines entnommenen Fluids (26) eines aus der Pipeline entfernten Fluidstroms (12) in ein Pipelineverunreinigungs-Überwachungsgerät (101) nach Anspruch 1, so dass das entnommene Fluid (26) zusammen mit darin enthaltenen Verunreinigungspartikeln mit einem Druck und einer Temperatur, die der Fluidstrom (12) innerhalb der Pipeline aufweist, zur nachfolgenden Messung gehalten wird;
Beleuchten, innerhalb des Pipelineverunreinigungs-Überwachungsgeräts (101), des aus dem Fluidstrom (12) innerhalb der Pipeline entnommenen Fluids (26) mit der Lichtquelle (31), um Streulicht (32) aus Verunreinigungspartikeln innerhalb des entnommen Fluids (26) zu erzeugen;
Umwandeln des Streulichts (32) unter Verwendung des mindestens einen Detektors (34) in ein elektrisches Signal, das für die Verunreinigungspartikelgröße repräsentativ ist; Verarbeiten des elektrischen Signals unter Verwendung des Prozessors (35) in digitale Daten, die sich auf die Verunreinigungspartikel beziehen; und
Übertragen der digitalen Daten unter Verwendung des Prozessors (35) über ein Kommunikationsnetz (22) an einen abgelegenen digitalen Datenprozessor (20, 23) zur Auswertung.

13. Verfahren nach Anspruch 12, ferner umfassend den Schritt der nicht isokinetischen Probenahme des Fluidstroms (12) in der Pipeline; oder ferner umfassend den Schritt der isokinetischen Probenahme des Fluidstroms (12) in der Pipeline, und optional ferner umfassend entweder den Schritt des Wiedereinspritzens des entnommenen Fluids (26) in die Pipeline oder den Schritt des Entlüftens des entnommenen Fluids (26) in die Atmosphäre.

14. Verfahren nach Anspruch 12, ferner umfassend den Schritt des Speicherns der digitalen Daten, die sich auf die Verunreinigungspartikel beziehen, zur Referenz und zum Vergleich.

15. Verfahren nach Anspruch 12, wobei der Schritt des Beleuchtens das Leiten des entnommenen Fluids (26) durch die Durchflusszelle (27) umfasst, um zu ermöglichen, dass mindestens ein Verunreinigungspartikel in dem entnommenen Fluid (26) mit Licht von der Lichtquelle (31) in Kontakt kommt, um Streulicht (32) zu erzeugen.

16. Verfahren nach Anspruch 12, wobei der Schritt des Verteilens das Übertragen der digitalen Daten über eine Ethernet-Verbindung an das Kommunikationsnetz (22) umfasst, oder wobei der Schritt des Verteilens das Übertragen der digitalen Daten über ein drahtloses Kommunikationsnetz (22) oder Sendesignal umfasst.

17. Pipelineverunreinigungs-Überwachungsgerät (101) nach Anspruch 4,
wobei die Lichtquelle (31) innerhalb des Gehäuses positioniert ist, um einen fokussierten Lichtstrahl (201) über den Durchgang (29), der das entnommene Fluid (26) enthält, zu propagieren, so dass Streulicht (32) erzeugt wird, wenn die Verunreinigungspartikel mit dem fokussierten Strahl (201) in Kontakt kommen.

18. Pipelineverunreinigungs-Überwachungsgerät (101) nach Anspruch 17, wobei der mindestens eine Detektor (34) konfiguriert ist, um das von der Sammellinse (33) empfangene Streulicht (32) in ein elektrisches Signal umzuwandeln, das proportional zur Größe der Verunreinigungspartikel ist.

## Revendications

1. Dispositif de surveillance de contaminants de pipeline (101) comprenant :
un boîtier ;
une source de lumière (31) située à l'intérieur du boîtier ;
un analyseur (15), situé à l'intérieur du boîtier, pour a) éclairer, au moyen de la source lumineuse (31), le fluide échantillonné (26) extrait d'un pipeline possédant des particules contaminantes, et b) collecter la lumière diffusée à partir des particules contaminantes dans le fluide échantillonné éclairé (26), l'analyseur (15) possédant une cellule d'écoulement (27) conçue pour recevoir un écoulement de fluide échantillonné (26) à une pression et une température présentées par l'écoulement de fluide (12) à l'intérieur du pipeline (11) et pour préserver l'écoulement de fluide échantillonné (26) à la pression et à la température à l'intérieur du pipeline ;
au moins un détecteur (34), situé à l'intérieur du boîtier, destiné à générer des signaux électriques à partir de la lumière diffusée (32) à partir de l'analyseur (15) ; et
un processeur (35), situé à l'intérieur du boîtier, a) destiné à convertir les signaux électriques en provenance de l'au moins un détecteur (34) en données numériques relatives aux particules contaminantes en vue d'une évaluation, et b) destiné à transmettre les données numériques à un réseau de communication (22) afin de distribuer les données numériques à au moins un processeur de données numériques (20, 23) pour un traitement ultérieur.

2. Dispositif de surveillance de contaminants de pipeline (101) selon la revendication 1, comprenant en outre une sonde (13) destinée à s'étendre à partir du boîtier dans le pipeline, la sonde (13) étant conçue pour diriger le fluide échantillonné (26) dans l'analyseur (15) du dispositif de surveillance de contaminants de pipeline (101) en vue de l'échantillonnage de manière isocinétique du fluide échantillonné (26) extrait du pipeline pour garantir qu'une quantité représentative de contaminants dans le pipeline peut ensuite être mesurée, le dispositif de surveillance de contaminants (101) comprenant éventuellement en outre une pompe (61) destinée à réinjecter le fluide échantillonné (26) dans le pipeline, et de préférence ledit fluide dans le pipeline étant un flux de gaz à haute pression.

3. Dispositif de surveillance de contaminants de pipeline (101) selon la revendication 1, comprenant en outre une sonde (13) destinée à s'étendre à partir du boîtier dans le pipeline, la sonde (13) étant conçue pour diriger le fluide échantillonné (26) dans l'analyseur (15) du dispositif de surveillance de contaminants de pipeline (101) en vue de l'échantillonnage de manière non isocinétique du fluide échantillonné (26) extrait du pipeline, ou comprenant en outre une sonde (13) destinée à s'étendre à partir du boîtier dans le pipeline en vue de l'échantillonnage du fluide situé le long d'une surface interne (83) du pipeline.

4. Dispositif de surveillance de contaminants de pipeline (101) selon la revendication 1, ladite cellule d'écoulement (27) comprenant une entrée (28), une sortie (30) et un passage (29) entre elles, la cellule d'écoulement (27) étant conçue pour recevoir le fluide échantillonné (26) au niveau de l'entrée (28), et diriger le fluide échantillonné (26) à travers le passage (29) de façon à permettre au fluide d'être éclairé par la source de lumière (31), et pour diriger davantage le fluide échantillonné (26) vers la sortie (30), ou ledit analyseur (15) comprenant en outre une lentille collectrice (33) destinée à collecter la lumière diffusée (32) et à transférer la lumière diffusée (32) vers l'au moins un détecteur (34) pour un traitement ultérieur.

5. Dispositif de surveillance de contaminants de pipeline (101) selon la revendication 1, ledit fluide dans le pipeline étant un écoulement de fluide à haute pression (12), ou ledit fluide dans le pipeline étant un écoulement de fluide à basse pression (12).

6. Dispositif de surveillance de contaminants de pipeline (101) selon la revendication 1, ladite source de lumière (31) étant une diode laser.

7. Dispositif de surveillance de contaminants de pipeline (101) selon la revendication 1, ledit au moins un détecteur (34) étant un tube photomultiplicateur, une photodiode ou un dispositif couplé à la charge.

8. Dispositif de surveillance de contaminants de pipeline (101) selon la revendication 1, lesdites données numériques comprenant une distribution de particules, des données de taille de particules et une concentration de contaminants.

9. Dispositif de surveillance de contaminants de pipeline (101) selon la revendication 1, ledit analyseur (15) étant conçu pour collecter la lumière diffusée (32) en provenance de particules de contaminants d'aérosols liquides possédant une taille allant de 0,1 micron à 10 microns, ou ledit analyseur (15) étant conçu pour collecter la lumière diffusée (32) en provenance de particules contaminantes de brouillard liquide possédant une taille allant de 11 microns à 100 microns.

10. Dispositif de surveillance de contaminants de pipeline (101) selon la revendication 1, ledit processeur (35) étant conçu pour transmettre des données numériques au réseau de communication (22) sur une connexion Ethernet, ou ledit processeur (35) étant conçu pour transmettre des données numériques sur un réseau de communication sans fil (22), ou ledit processeur (35) étant conçu pour transmettre les données numériques sur un signal de diffusion radio.

11. Dispositif de surveillance de contaminants de pipeline (101) selon la revendication 1, comprenant en outre un câble à fibre optique (16) destiné à diriger la lumière diffusée (32) vers l'au moins un détecteur (34), de préférence ledit câble à fibre optique (16) étant conçu pour agir afin de réduire la lumière diffusée (32) à un niveau pour une sensibilité optimale et le fonctionnement de l'au moins un détecteur (34).

12. Procédé de surveillance de contaminants dans un pipeline (11), le procédé comprenant :
la direction d'un fluide échantillonné (26) d'un écoulement de fluide (12) extrait du pipeline dans un dispositif de surveillance de contaminants de pipeline (101) selon la revendication 1, de sorte que le fluide échantillonné (26) ainsi que les particules contaminantes qu'il contient soient conservés à une pression et une température présentée par l'écoulement de fluide (12) à l'intérieur du pipeline pour une mesure ultérieure ;
l'éclairage, à l'intérieur du dispositif de surveillance de contaminants de pipeline (101), du fluide échantillonné (26) extrait de l'écoulement de fluide (12) à l'intérieur du pipeline avec la source de lumière (31), de façon à générer une lumière diffusée (32) provenant de particules de contaminants à l'intérieur du fluide échantillonné (26) ;
la conversion, à l'aide de l'au moins un détecteur (34), de la lumière diffusée (32) en un signal électrique qui est représentatif de la taille des particules contaminantes ; le traitement, à l'aide du processeur (35), du signal électrique en des données numériques relatives aux particules contaminantes ; et
la transmission, à l'aide du processeur (35), des données numériques par l'intermédiaire d'un réseau de communication (22) à un processeur de données numériques situé à distance (20, 23) en vue d'une évaluation.

13. Procédé selon la revendication 12, comprenant en outre l'étape d'échantillonnage de manière non isocinétique du flux de fluide (12) dans le pipeline ; ou comprenant en outre l'étape d'échantillonnage de manière isocinétique de l'écoulement de fluide (12) dans le pipeline, et éventuellement comprenant en outre soit l'étape de réinjection du fluide échantillonné (26) dans le pipeline, soit l'étape d'évacuation du fluide échantillonné (26) dans l'atmosphère.

14. Procédé selon la revendication 12, comprenant en outre l'étape de stockage des données numériques relatives aux particules contaminantes pour référence et comparaison.

15. Procédé selon la revendication 12, ladite étape d'éclairage comprenant la direction du fluide échantillonné (26) à travers la cellule d'écoulement (27) de façon à permettre à au moins une particule contaminante dans le fluide échantillonné (26) d'entrer en contact avec la lumière provenant de la source de lumière (31) pour générer de la lumière diffusée (32).

16. Procédé selon la revendication 12, ladite étape de distribution comprenant la transmission des données numériques au réseau de communication (22) sur une connexion Ethernet, ou ladite étape de distribution comprenant la transmission des données numériques sur un réseau de communication sans fil (22) ou d'un signal de diffusion.

17. Dispositif de surveillance de contaminants de pipeline (101) selon la revendication 4,
ladite source de lumière (31) étant positionnée à l'intérieur du boîtier pour propager un faisceau focalisé (201) de lumière à travers le passage (29) contenant le fluide échantillonné (26), afin que la lumière diffusée (32) soit générée lorsque les particules contaminantes entrent en contact le faisceau focalisé (201).

18. Dispositif de surveillance de contaminants de pipeline (101) selon la revendication 17, ledit au moins un détecteur (34) étant conçu pour convertir la lumière diffusée (32) reçue en provenance de la lentille collectrice (33) en un signal électrique qui est proportionnel à la taille des particules contaminantes.
